(19) Europäisches Patentamt / European Patent Office / Office européen des brevets

(11) **EP 4 549 490 A1**

(12) **EUROPEAN PATENT APPLICATION**

(43) Date of publication:
**07.05.2025 Bulletin 2025/19**

(21) Application number: **23206697.7**

(22) Date of filing: **30.10.2023**

(51) International Patent Classification (IPC):
***C08G 79/04*** *(2006.01)* ***C08G 79/06*** *(2006.01)*
***C08L 85/02*** *(2006.01)*

(52) Cooperative Patent Classification (CPC):
**C08G 79/04; C08G 79/06; C08L 85/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Université de Liège**
**4000 Liège (BE)**

(72) Inventors:
- **RABAUX, Oscar**
  **4020 Liège (BE)**
- **JÉRÔME, Christine**
  **4102 Ougrée (BE)**
- **RIVA, Raphaël**
  **4400 Flémalle (BE)**

(74) Representative: **Winger**
**Mouterij 16 bus 101**
**3190 Boortmeerbeek (BE)**

Remarks:
A request for correction the description, claims and abstract has been filed pursuant to Rule 139 EPC. A decision on the request will be taken during the proceedings before the Examining Division (Guidelines for Examination in the EPO, A-V, 3.).

(54) **CURABLE PHOSPHOROUS-BASED COPOLYMER AND ITS COMPOSITE FOR USE AS A MEDICAL IMPLANT**

(57) The present invention relates to a curable copolymer comprising a first terminal chain consisting of monomer units according to formula (Ia), a second terminal chain consisting of monomer units according to formula (Ib) and a central chain comprising monomer units according to formula (II), said first and second terminal chains being each coupled to one end of said central chain.

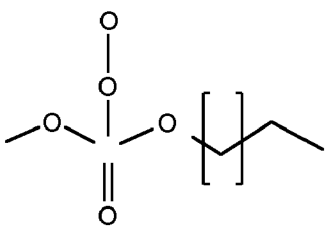

(Ia)

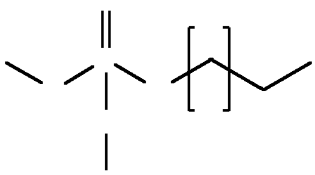

(II)

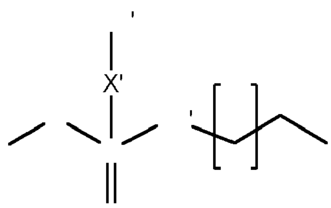

(Ib)

The present invention also relates to the process for curing such copolymers, to degradable composites comprising such copolymers and medical implants comprising such degradable composites.

EP 4 549 490 A1

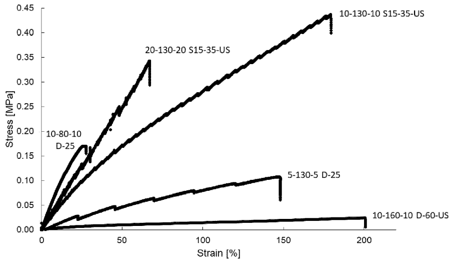
0.45
0.40
0.35
0.30
0.25
0.20
0.15
0.10
0.05
0.00
Stress [MPa]
0
50
100
150
200
Strain [%]
10-130-10 S15-35-US
20-130-20 S15-35-US
10-80-10
D-25
5-130-5 D-25
10-160-10 D-60-US

Figure 2

## Description

### Technical field of the invention

The present invention relates to the field of curable phosphorous-based copolymers, the process for curing such copolymers, to degradable composites comprising such copolymers and medical implants comprising such degradable composites.

### Background of the invention

The rapid development of materials and technologies has led to the design of numerous medical devices supplementing functions of living organisms. Making available shape-memory and remote deploying materials made minimally invasive surgeries a today reality, saving many lives every day. As an example, cardiovascular stents are remote deploying devices currently used to treat thrombosis, a disease causing many deaths worldwide. The common standard device is today a non-degradable metal grid coated with a stable polymer enabling local drug-elution. However, the patient will keep the stent all the rest of his life, which is accompanied with lifetime medication, and novel accumulation of atheroma on the stent, called restenosis, is not rare. To tackle these issues, research has only recently started on bioresorbable scaffolds which are degraded after fulfilling their roles.

Hydrogels which are at least partly degradable are known with polyesters or functionalized polyurethanes. Nevertheless, these polymers did not offer yet the optimal properties because of slow degradation or lack of tunability.

As one of the few hydrolytically degradable polymers families, polyphosphoesters (PPEs) have been recently highlighted for their physico-chemical versatility, notably because of the pentavalency of the phosphorus atom. Additionally, PPEs are often referred as DNA-like, because phosphodiester is indeed a building block of DNA or RNA. Based on this chemical structure they have been consistently reported as biocompatible even *in vivo.*

Riva et al. synthesized PPE networks by reacting under UV light phosphate-containing chains bearing pendant unsaturations randomly distributed along the PPE backbone (Biomacromolecules 2020, 21, 349-355). Nevertheless, these compounds are soft but fragile. They lack elasticity, preventing efficient use as an elastomer degradable alternative.

There is, therefore, a need in the art for new compounds overcoming at least partially one or more of the issues mentioned above.

### Summary of the invention

It is an object of the present invention to provide compounds which present good elastic properties. It is an advantage of the present invention that the compounds may be used in composites which are suitable for use as medical implants.

The above objective is accomplished by a compound, a process and a composite according to the present invention.

In a first aspect, the present invention relates to a curable copolymer comprising a first terminal chain consisting of monomer units according to formula (Ia), a second terminal chain consisting of monomer units according to formula (Ib) and a central chain comprising monomer units according to formula (II), said first and second terminal chains being each coupled to one end of said central chain,

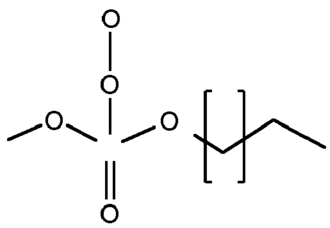

(Ia)

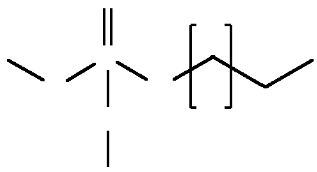

(II)

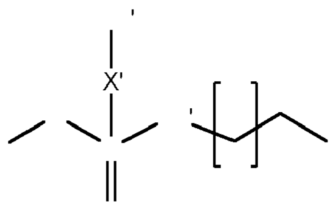

(Ib)

wherein:

- one of $X_1$, $X_2$ is an oxygen, one of $X_1$', $X'_2$ is an oxygen, one of $Y_1$, $Y_2$ is an oxygen, the other of each pair is independently of one another an oxygen, a $NR_3$ group, or a $C(R_4)_2$ group;
- $R_1$ and $R_1$' each independently from one another is a curable group selected from a list consisting of a double carbon bond, a triple carbon bond, a vinyl ether, and an acrylate group, optionally preceded by an alkyl chain of 1 to 20 carbon

atoms;

$R_2$ is either a non-curable group selected from a list consisting of a hydrogen, an alkyl chain of 1 to 20 carbon atoms, an oligo(ethylene oxide), and an optionally substituted aryl group, or $R_2$ is absent and $Y_1$ is an oxygen ion;

$R_3$ and $R_4$ denote a hydrogen or a hydrocarbon group of 1 to 6 carbon atoms;

p, p' and q each independently of one another denote an integer from 0 to 10;

the number of monomer units according to formula (Ia) and (Ib) each is an integer from 6 to 20 as measured from GPC calibrated with polystyrene standard;

the number of monomer units according to formula (II) is from 85 to 155 as measured from GPC calibrated with polystyrene standard.

Such curable copolymer has an advantageous combination of degradable properties and good mechanical properties.

Without being bound by theory, the following is believed:

- The degradable properties come from the presence of phosphorous-based monomer units.
- The good mechanical properties come from the position of the curable groups in the terminal chains. It also comes from the number of monomer units according to formula (Ia) and (Ib) being from 6 to 20.
- The position of the curable groups and/or the number of the monomer units containing curable groups is such that curing is particularly facilitated. It advantageously results in good swelling properties in a solvent, such as in an alcohol or in water. A facilitated curing is further advantageous for the use of such curable copolymer in composites.
- The mechanical properties further come from the central chain with the number of monomer units according to formula (II) being from 85 to 155 as measured from GPC calibrated with polystyrene standard. The central chains are hence significantly longer than the terminal chains. Such length of central chain is particularly advantageous for good mechanical properties.

By mechanical properties, one means one of stiffness, softness, elongation at break, Young's modulus, stretchability, elasticity. Mechanical properties are measured after curing the curable copolymer of the present invention.

Advantageously, such curable copolymer also has a good balance between hydrophilicity and hydrophobicity. It may be versatile through the choice of the $R_2$ non-curable group. When swelling in water is favoured by a short $R_2$ group, such as a methyl, an ethyl or a butyl, a gel may advantageously be obtained after curing.

In formula (Ia), (Ib) and (II), stars schematically represent an end of corresponding monomer unit. Such end may be coupled to an adjacent monomer unit. In the case of formula (Ia) and (Ib), such end may also be coupled to an initiator of polymerization or be a radical or an atom or a molecule, said atom or molecule preferably coming from said initiator of polymerization. In embodiments, $X_1$ and $X_2$ are both oxygen, the formula (Ia) being a phosphoester unit.

In embodiments, $X_1$' and $X_2$' are both oxygen, the formula (Ib) being a phosphoester unit.

In embodiments, $Y_1$ and $Y_2$ are both oxygen, the formula (II) being a phosphoester unit.

Advantageously, the monomer units are obtained by the ring-opening of the corresponding cyclic phosphorous-based derivatives.

In embodiments, the curable group is a double bond.

In embodiments, the curable group is preceded by an alkyl chain of two carbon atoms.

In preferred embodiments, $R_1$ and/or $R_1$' is a butenyl group.

This is advantageous because of its chemical reactivity. Advantageously, the curable group enables to form crosslinking nodes between the copolymer chains upon curing. Advantageously, curing may be performed by photo-curing such as UV-curing, which may be faster than thermal curing.

In embodiments, $R_1$ and $R_1$' in formula (Ia) and (Ib) are the same.

In embodiments, X and X' in formula (Ia) and (Ib) are the same.

In embodiments, p and p' in formula (Ia) and (Ib) are the same.

In preferred embodiments, formula (Ia) is the same as formula (Ib).

This is advantageous because the same monomer may be used for both terminal chains.

In embodiments, p and p' are each 1.

In embodiments, q is 1.

In a preferred embodiment, the number of monomer units according to formula (Ia) and (Ib) is each from 8 to 15.

In embodiments, the curable copolymer according to the first aspect of the invention may have a central chain which further comprises monomeric units according to formula (IIb), said monomeric units according to formula (II) and formula (IIb) being randomly or sequentially distributed in said central chain,

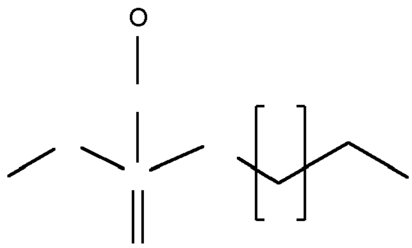

(IIb)

wherein:

- one of $Y_1$', $Y_2$' is an oxygen, the other is an oxygen, a $NR_3$ group or a $C(R_4)_2$ group;
- $R_2$' is either a non-curable group selected from a list consisting of a hydrogen, an alkyl chain of 1 to 20 carbon atoms, an oligo(ethylene oxide), and an optionally substituted aryl group, or $R_2$' is absent and $Y_1$' is an oxygen ion, with the proviso that $R_2$' is different from $R_2$ of formula (II);
- $R_3$ and $R_4$ denote a hydrogen or a hydrocarbon group of 1 to 6 carbon atoms;
- q' denotes an integer from 0 to 10;
- the sum of monomer units according to formula (II) and formula (IIb) is from 85 to 155 as measured from GPC calibrated with polystyrene standard.

This is advantageous to modulate the properties of the copolymer. For example, it is possible to modulate the hydrophilicity of the copolymer by having a shorter $R_2$' group in monomer unit according to formula (IIb) compared to the $R_2$ group in monomer unit according to formula (II).
When $R_2$ or $R_2$' is an alkyl chain of 1 to 20 carbon atoms or an oligo(ethylene oxide), it may commonly be referred to as a side chain, with respect to the central chain of the copolymer of the present invention.
In preferred embodiments, monomer units (II) and monomer units (IIb) are randomly distributed in the central chain.
In preferred embodiments, $R_2$ group in monomer unit (II) is butyl and $R_2$' group in monomer unit (IIb) is methyl. In yet preferred embodiments, the central chain comprises an equal amount of monomer units according to formula (II) and monomer units according to formula (IIb).
In embodiments, $Y_1$' and $Y_2$' are both oxygen, the formula (IIb) being a phosphoester unit.
In a second aspect, the present invention relates to the process for curing the copolymer of the first aspect comprising the steps of:

- proving a solution of the curable copolymer according to the first aspect of the invention and a photo-activator,
- optionally at least partially drying said solution,
- irradiating the solution with light of wavelength corresponding to photoactivation of said photo-activator.

Alternatively, the curing step may be done through the addition of a curing agent. By adding a group with one or more thiols, one may perform a thiol-ene or thiol-yne click reaction based on respectively a double or a triple bond in the copolymer. Examples of such type of curing is for example available in Macromol. Biosci. 2016, 16, 1745-1761. The thiol-ene or thiol-yne click reaction may be activated by light or be thermally activated.
Alternatively, the curing step may be done thermally.
A preferred condition for curing is UV-curing with a photo-activator. It may be performed by irradiation with typical wavelength of UV-light for a duration of from 1 minute to 24 hours.
Curing efficiency may be evaluated by gel time. The gel time may be determined by measuring G' and G" shear moduli crossover in a time sweep rheology experiment performed upon UV-A exposure.
In embodiments, the step of irradiation in the process for curing a copolymer according to the second aspect of the invention may be performed under ultrasonication.
This is advantageous to facilitate curing or increase the curing rate.
In embodiments, irradiation may be performed under a temperature of from 20°C to 80°C, preferably from 20°C to 60°C, preferably from 25°C to 40°C.
Any feature of the second aspect may be as correspondingly described in any other aspect of the invention.
In a third aspect, the present invention relates to a composite comprising the curable copolymer of the first aspect of the invention and degradable polyester fibres.

Any feature of the third aspect may be as correspondingly described in any other aspect of the invention.
In embodiments, degradable polyester fibres may be one or more degradable polyester fibres selected from fibres of polylactide (PLA), polyglycolide (PGA), poly(lactic-co-glycolic acid) (PLGA), polycaprolactone (PCL), polyanhydride, isomers thereof, copolymers thereof, and derivatives thereof.
In a preferred embodiment, the degradable polyester fibres are polycaprolactone fibres.
In embodiments, the degradable polyester fibres may have a diameter of from 50 to 1000 nanometers, preferably from 200 to 800 nanometers, more preferably from 400 to 700 nanometers.
In preferred embodiments, the degradable polyester fibres may be structured in a honeycomb pattern.
In embodiments, the curable copolymer according to the first aspect of the invention has been cured in the composite so as to form a network of cured copolymer embedding the degradable polyester fibres.
In a fourth aspect, the present invention relates to a process for preparing the composite according to the third aspect of the invention comprising the steps of:

- electrospinning a solution of a degradable polyester on a template, preferably on a honeycomb patterned template,
- providing a solution of a curable copolymer according to the first aspect of the invention,
- dipping the electrospun degradable polyester fibres in the solution of the curable copolymer according to the first aspect of the invention,
- drying the so-obtained composite,
- curing the so-obtained composite

In preferred embodiments, curing the composite is performed by photo-curing in presence of a photo-activator, more preferably by UV-curing.
Advantageously, UV crosslinking of the copolymers is more efficient in the presence of degradable fibres. Without being bound by theory, it is believed that this surprising observation is caused by the scattering in all directions of the UV light by the fibres. It is thus advantageous to combine the curable copolymer of the invention with polyester fibres. With such efficiency, only one side needs to be irradiated to achieve good crosslinking, rather than irradiating both sides of the composite. Advantageously a homogenous crosslinking is easily obtained.
Preferably, curing is performed at room temperature or at a temperature from 20°C to 60°C, preferably at a temperature from 25°C to 40°C.
In embodiments, electrospinning may be performed on a honeycomb patterned template, said honeycomb pattern having preferably a size of hexagon below 10 millimetres, more preferably below 1 millimetre.
In a fifth aspect, the present invention relates to a medical implant comprising the composite of the third aspect of the invention.
In embodiments, a medical implant may be a vascular dressing, a blood vessel, an artery or any type of implant where degradability is sought. In particular, where degradability combined with good mechanical properties, such as an elastomeric character, is sought. For example, the composite of the third aspect of the invention may be used to treat arterial pathologies. The medical implant may for example be covering the inner wall of a blood vessel for a preventive or therapeutic purpose.
Any feature of the fifth aspect may be as correspondingly described in any other aspect of the invention.
Particular and preferred aspects of the invention are set out in the accompanying independent and dependent claims. Features from the dependent claims may be combined with features of the independent claims and with features of other dependent claims as appropriate and not merely as explicitly set out in the claims.
The above and other characteristics, features, and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 shows $^1$H-NMR spectra in $CD_2Cl_2$ of the triblock copolymer sequential synthesis from a monofunctional initiator
Fig. 2 shows tensile tests of the networks obtained with different copolymers of Example 1
Fig. 3 shows SEM micrographs showing surface aspects of composites c-HC1 at (A) air side, (A') mold side and c-HC2 at (B) air side, (B') mold side
Fig. 4 shows tensile tests of composites c-HC1 and c-HC2 and the comparison to the composite with a mat of fibres randomly deposited and of equivalent diameter
Fig. 5 shows the composite behavior when programmed at the dry state and swollen first in cold water (20°C) and then

hot water (80°C) above the melting temperature of PCL - Scale bar: 1.0 mm
Fig. 6 shows the visual characterization of shape-fixing around a tube represented by the dotted circle - Scale bar: 0.5 mm
Fig. 7 shows the degradation kinetics of composites based on the ratio of swelling of pads left in PBS (pH=7.4) for several days, each point representing a distinct pad.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third, and the like in the description and in the claims, are used for distinguishing between similar elements and not necessarily for describing a sequence, either temporally, spatially, in ranking, or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The terms "over" and "above" are used as synonyms and cover situations with and without physical contacts. The term "on" means "over and in physical contact with".

It is to be noticed that the term "comprising", used in the claims, should not be interpreted as being restricted to the means listed thereafter; it does not exclude other elements or steps. It is thus to be interpreted as specifying the presence of the stated features, integers, steps, or components as referred to, but does not preclude the presence or addition of one or more other features, integers, steps or components, or groups thereof. The term "comprising" therefore covers the situation where only the stated features are present (and can therefore always be replaced by "consisting of" in order to restrict the scope to said stated features) and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures, or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods,

structures, and techniques have not been shown in detail in order not to obscure an understanding of this description.

The following terms are provided solely to aid in the understanding of the invention.

In the context of the invention, a copolymer refers to a polymer formed from the polymerization of at least two monomeric units differing in chemical nature. Monomer units may be randomly distributed (also referred to as statistically distributed) or have a gradient distribution or be sequentially distributed, the later leading to block copolymers.

In the context of the invention, a block copolymer refers to a polymer formed of at least two polymers, differing in chemical nature, and attached to each other. Each polymer composing the block copolymer is called a block or a chain. Each block can either be a homopolymer or a copolymer selected from statistical copolymers and gradient copolymers.

In the context of the invention, a triblock copolymer may be a A-B-A copolymer (A and B being two different units) or A-B-C copolymer (A, B and C being three different units).

A random distribution of monomer units is obtained when two or more monomer units are in presence during the polymerization step. A block copolymerization is obtained when two of more monomer units are sequentially added during the polymerization step.

By curable group, one means a chemical group being able to react with another chemical group so as to form a new link between atoms of different polymer chains. Curable or curing may also be referred to as crosslinkable or crosslinking respectively. Non-curable means that it has no ability to crosslink with another polymer chain. Crosslinking of polymer chains typically results in the formation of nodes between such polymer chains. Curable groups are preferably located at the end of a chain so as to form such nodes. Curing may be done by any suitable methods known in the art, such as thermally curing, ambient temperature curing, chemical curing, photo-curing, curing with thiol-ene of thiol-yne reactions and the like. Photo-curing may be done by using any appropriate wavelength of light depending on the photo-active group in presence. Example of photo-activators active under UV-light are compounds from the Irgacure family.

By coupling, one means forming a chemical bond between adjacent atoms or group of atoms.

By end of chain, one means the last atom of a chain which may be coupled to another atom.

By an alkyl chain, one means a straight or a branched alkyl chain, for example a methyl, an ethyl, a propyl, a butyl, an isobutyl, a hexyl and the like.

By oligo(ethylene oxide) is meant an oligomer (a chain with from 1 to 20 monomer units) of ethylene oxide.

By a composite one means a material comprising two or more constituent materials, in particular a material comprising two or more constituent materials differing in physico-chemical properties and which are merged to create a material with properties unlike the properties of the individual elements. In particular, a composite according to the present invention is comprising at least a phosphorous-based copolymer merged with degradable polyester fibres.

The present invention relates to phosphorous-based copolymers. Such compounds are particularly interesting due to their degradability and their biocompatibility.

Phosphorous-based monomer units may be obtained by the ring-opening of the corresponding cyclic phosphate derivatives or cyclic phosphonate derivatives. Examples of cyclic monomers include 2-methoxy-2-oxo-1,3,2-dioxaphospholane, 2-butenoxy-2-oxo-1,3,2-dioxaphospholane, cyclic allyl phosphate, butenyl phosphate, butynyl phosphate, vinyl ethylene phosphate, such as for example described in Macromol. Biosci. 2016, 16, 1745-1761.

Phosphorous-based copolymers of the invention comprise at least a central chain and two terminal chains each coupled to one end of the central chain. They may be referred to as block copolymers, with one block being the central chain and the terminal chains being other blocks. Hence, the copolymer according to the present invention is a triblock copolymer. The central chain or central block is advantageously non-curable. The terminal chains or terminal blocks are advantageously curable.

Phosphorous-based copolymers of the invention comprise curable groups located in the terminal chains while non-curable groups are located in the central chain. In embodiments, all monomer units of the central chain are non-curable. In embodiments, the central chain comprises no unsaturation that may result in crosslinking with another polymer chain. This enables to control the position of the crosslinking nodes and further the properties of the compounds after curing, such as the mechanical properties, tensile strength, stiffness, elongation at break, swelling in water. The location of the crosslinking nodes is also responsible for a high insoluble fraction after curing.

In embodiments, the central chain may be one block or may comprise more than one block, all monomer units of the central chain being non-curable. This is advantageous to obtain an elastomeric character of the copolymer.

In embodiments, the central chain is consisting of monomer units according to formula (II) or consisting of monomer units according to formula (II) and monomer units according to formula (IIb).

The number of curable groups is advantageously high enough to favour crosslinking and low enough for the balance of mechanical properties.

Advantageously, the hydrophilicity of the copolymers may be tuned by choosing an appropriate $R_2$ substituent in the monomer unit of the central chain. In particular, hydrophilicity may be tuned by varying the length of the alkyl chain in $R_2$ substituent.

The type of alkyl group on the side chain (R2 or R2' substituent) advantageously has an impact on the polymer interaction with water. Hence, an at least partial replacement of butyl group by methyl groups may increase the hydrophilic

character of the material. It increases the solubility in water, and/or its swelling rate after crosslinking. Using an oligo(ethylene oxide) as side chain (R2 or R2' substituent) may also increase the hydrophilicity.

In some embodiments, the hydrophilicity may be tuned by combining an appropriate $R_2$ substituent with an appropriate $R_2$' substituent.

The hydrophilicity may advantageous have an impact on the degradation rate of the phosphorous-based copolymer. Higher or slower degradation rates may hence be obtained. A higher hydrophilicity may lead to a higher degradation rate.

The hydrophilicity may also be tuned so as to avoid interfering effect of water plasticizing. A lower hydrophilicity may avoid such effect.

Advantageously, a copolymer according to the invention has good stretchability properties after curing. This comes on the one side from an optimal number of monomer units in the curable terminal chains and on the other side from an optimal number of monomer units in the non-curable central chain.

The copolymers of the present invention offer a unique combination of high elongation at break and high gel content after curing.

The copolymers of the present invention offer a unique combination of relatively high elongation at break and relatively high Young's modulus E (indication of stiffness, also referred to as module of elasticity).

Advantageously, the copolymers of the present invention have an elastomeric behaviour. Copolymers of the present invention may have an elongation at break from 15%, preferably from 40%, more preferably from 50 %, from 60 %, from 70 %, even up to 180%, i.e. 12-times higher compared to literature.

Advantageously, the copolymers of the present invention have a Young's modulus from 0.15 MPa, preferably from 0.20 MPa, more preferably from 0.40 MPa. The efficiency of curing of the copolymers of the present invention may be evaluated by measuring the insoluble fraction after curing. For this, the cured copolymer is solubilized in a good solvent such as for example methanol, and a ratio is calculated as provided hereafter in the examples.

Advantageously, the insoluble fraction of the copolymer according to the invention after curing is equal or higher than 75 %.

Advantageously, the insoluble fraction is not affected by the at least partial replacement of monomer units in the central chain by other monomer units having a higher hydrophilicity.

The efficiency of curing may also be obtained by calculating the swelling ratio according to the ratio as provided hereafter in the examples.

Advantageously, the swelling ratio or rate of the cured copolymer is inferior to 500 %, preferably inferior to 400 %.

In embodiments, the curable copolymer of the invention is a copolymer according to formula (III) hereafter.

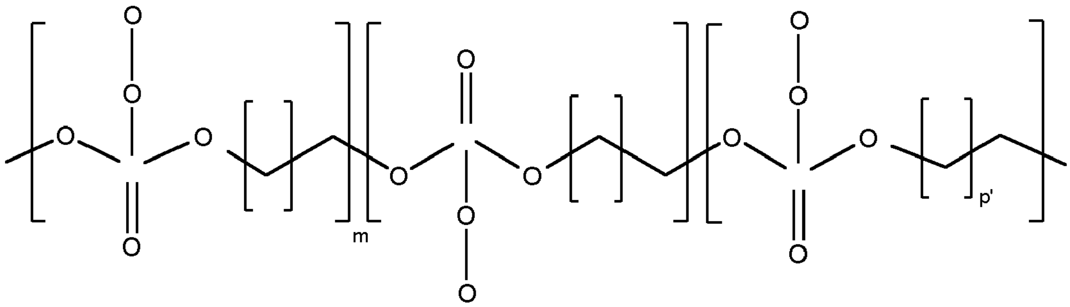

(III)

wherein:

- $Z_1$ and $Z_2$ come from the initiator of polymerization;
- one of $X_1$, $X_2$ is an oxygen, one of $X_1$', $X'_2$ is an oxygen, one of $Y_1$, $Y_2$ is an oxygen, the other of each pair is independently of one another an oxygen, a $NR_3$ group, or a $C(R_4)_2$ group;$R_1$ and $R_1$' each independently from one another is a curable group selected from a list consisting of a double carbon bond, a triple carbon bond, a vinyl ether, and an acrylate group, optionally preceded by an alkyl chain of 1 to 20 carbon atoms;$R_2$ is either a non-curable group selected from a list consisting of a hydrogen, an alkyl chain of 1 to 20 carbon atoms, an oligo(ethylene oxide), and an optionally substituted aryl group, or $R_2$ is absent and $Y_1$ is an oxygen ion;
- $R_3$ and $R_4$ denote a hydrogen or a hydrocarbon group of 1 to 6 carbon atoms;
- p, p' and q each independently of one another denote an integer from 0 to 10;
- m and m' are from 6 to 20 and n is from 85 to 155 as measured from GPC calibrated with polystyrene standard.

A preferred copolymer according to the invention is a copolymer of formula (IV) here under.

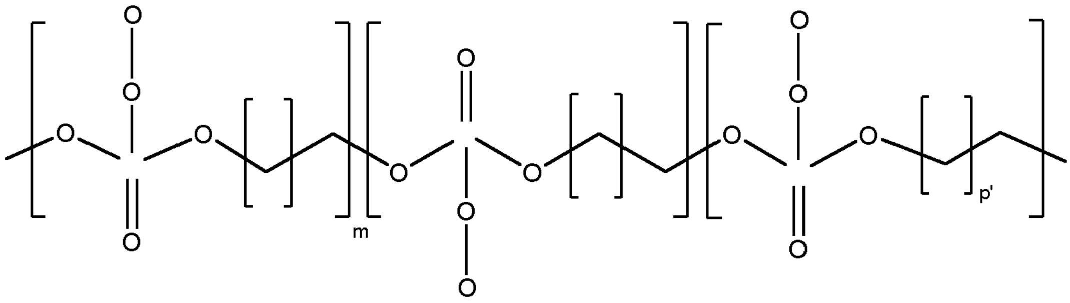

(IV)

Where $Z_1$ and $Z_2$ come from the initiator of polymerization, for example $Z_1$ is a benzyl group and $Z_2$ is a hydroxyl group when a benzyl alcohol is used, Where $R_1$ and $R_1$' are a butenyl group, $R_2$ is a butyl group or a random distribution of a methyl group and a butyl group,

Where p, p' and q are each independently of one another an integer from 0 to 10, preferably p, p' and q are each 1, and where m and m' are from 6 to 20 and n is from 85 to 155, preferably from 100 to 150 as measured from GPC calibrated with polystyrene standard.

According to a further aspect, the invention provides a composite which comprises degradable polyester fibres. Preferably, said fibres are structured in the shape of a honeycomb. To prepare such composite, the copolymer according to the invention is dissolved in a solvent, such as methanol, then it is poured over the polyester fibres, followed by a drying step and a curing step.

Advantageously, impregnation of the degradable polyester fibres by the copolymer of the invention is complete, up to the upper surface. This is obtained thanks to the wettability between both polymers (phosphorous-based copolymer and degradable polyester).

Advantageously, the impregnation is independent from the size of the hexagon in the honeycomb pattern.

Advantageously, one side of the composite retains the roughness of the fibrous mat while the other side is completely smooth.

Advantageously, such composite structure creates a gradient responsible for the self-folding capacity.

Advantageously, after curing, the composite has good mechanical properties. Advantageously, there is no delamination when the composite is stretched.

Advantageously, when used with structured fibres, the composite provides a particularly good reinforcement because its absorbs more energy before fracture as it is stiffer and elongates more as compared to a composite having non-structured fibres.

Advantageously, the composite presents self-folding capacity.

Advantageously the self-folding capacity is oriented. Indeed, the observed curvature may be larger when the angle between the zigzag direction (0°) and the tensile axis is 15° compared to 30°.

Advantageously, once the composite is self-folded, it can be opened by two ways, namely by heating and by swelling in water. Hence, the initial shape can be recovered simply by heating above the melting temperature of the degradable polyester fibres and a new shape can be reprogrammed. Advantageously this can be repeated. Secondly, the folded shape can also be opened by swelling in water, or body fluids for instance.

Advantageously, the composite may be used as an implant. It has the capacity to swell with body liquids when inserted.

Advantageously, the gradient along the thickness which is responsible for the fold is also responsible for a differential swelling like a hygromorph. Indeed, the composite could be schemed as a bilayer, where one layer made of copolymer of the invention is hydrophilic while the other made of copolymer of the invention and degradable polyester is restricted by the hydrophobicity of the polyester fibres. While the copolymer layer comes in the inside when actuated as a mechanomorph, it goes towards the outside of the curve when actuated as a hygromorph because it swells more. Therefore, swelling in cold water is responsible for an opening of the curved object. After swelling for a few seconds, the composites open in a controlled manner, maintaining a constant ratio between the angles measured before and after immersion.

Surprisingly, the honeycomb pattern with smaller hexagons retains more the fold upon swelling compared to higher hexagons. Even considering this difference, all tested honeycomb patterns are advantageous to retain the folding.

Advantageously, the behaviour upon swelling may be controlled by choosing a specific hexagons size. It is also interesting to mention that because the swelling is responsible for a fold in the other direction as the one obtained mechanically, the curvature changes direction when the fibres are melted and do not retain the shape anymore. This curve inversion when taking the composite from cold to hot water, was really rapid, in a one second scale, and could most probably be also advantageous for temperature sensors, where the velocity of the switch is important. Upon drying, composites regain their initial flat shapes, closing the loop which could be restarted at will.

Interestingly, the propensity to release or not the folded shape upon immersion in water is controlled by the nature of the copolymer. It renders such copolymer versatile.

Advantageously, the shape-memory performances are repeatable. For example, a sample can be cycled more than 10 times at least.

Advantageously, the composite of the invention is non cytotoxic.

Advantageously, the composite of the invention is degradable. For example, after about 50 days, the network has lost a majority of crosslinking nodes. Advantageously, the composite degrades almost completely within 10 weeks. Interestingly, the smaller the hexagons from the honeycomb pattern, the faster the degradation. This could be leveraged to precisely tailor the kinetics of degradation according to specific needs.

Advantageously, the composite properties are versatile. On the one hand, it is possible to have a hydrogel whose swelling remains limited to keep the shape-memory and self-folding capacities. On the other hand, it is possible to have a material which interacts poorly with water such that it is able to maintain its fold upon immersion in water.

Advantageously, the composite is hemocompatible.

Advantageously, the composite may resist to pressure and flow rate of blood inside an artery.

Advantageously, the composite may mimic a blood vessel, for example it may mimic the inner wall of a blood vessel.

Advantageously, the composite may be used to prevent or treat arterial pathologies.

## Examples

### Example 1. Preparation of copolymers

Several ABA triblock copolymers with butenyl ethyl phosphate (BenEP) and butyl ethyl phosphate (BEP) as monomer units giving a (poly(BenEP-b-BEP-b-BenEP)) were synthesized. Cyclic phosphate monomers i.e. 2-methoxy-2-oxo-1,3,2-dioxaphospholane (MEP), 2-butenoxy-2-oxo-1,3,2-dioxaphospholane (BenEP), butanoxy-2-oxo-1,3,2-dioxaphospholane (BEP) were obtained by a previously described method (Macromolecules, 2012, 45, 4476). Initiator used was benzyl alcohol (BzOH). Synthesis was performed in a tri-sequenced ring-opening polymerization where monomers of each block were added successively.

Before addition of the following monomer a sampling was made to follow the polymerization and its evolution block by block. A co-catalytic system was used according to Clement et al. conditions (Macromolecules, 2012, 45, 4476). Such authors reported the combination of catalyst 1,8-diazabicyclo[5.4.0]undec-7-ene (DBU) with a thiourea derivative (for example 1-1-[3,5-bis(trifluoromethyl)phenyl]-3-cyclohexyl-2-thiourea). It allows obtaining polyphosphoester with a good control of the polymerization (polydispersity close to 1) and pre-determined degree of polymerization (DP). With this TU/DBU catalytic system, a high conversion may be reached in times such as for example 40 min at 0 °C in toluene.

In addition, a different hydrophilic triblock copolymer was synthesized by replacing half of the butyl ethyl phosphate central units by methyl ethyl phosphate units in a random copolymerization of the corresponding cyclic monomers mixture. Such later triblock copolymer is hereinafter referred to with copolymer code 10-65/65-10.

Table 1: Conditions for the synthesis of triblock copolymers

| Copolymer code | Initiator (mmol BzOH) | Block n°1 (mmol BenEP) | Block n°2 (mmol BEP) | Block n°3 (mmol BenEP) |
|---|---|---|---|---|
| **10-130-10** | 0.42 | 4.10 | 53.7 | 4.10 |
| **20-130-20** | 0.39 | 7.85 | 47.2 | 7.85 |
| **10-80-10 comparative example** | 1.0 | 11.1 | 44.4 | 11.1 |
| **10-160-10 comparative example** | 0.44 | 4.18 | 81.7 | 4.18 |
| **5-130-5 comparative example** | 0.61 | 3.05 | 73.3 | 3.05 |

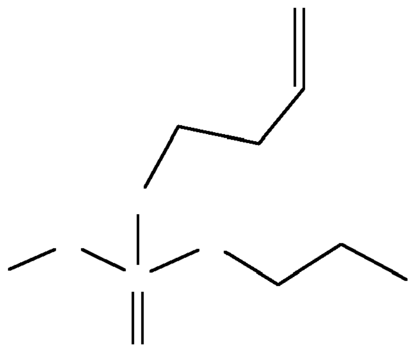

Scheme 1: Schematic representation of monomer unit comprised in the blocks 1 and 3 (i.e. terminal chains) of copolymers in Example 1

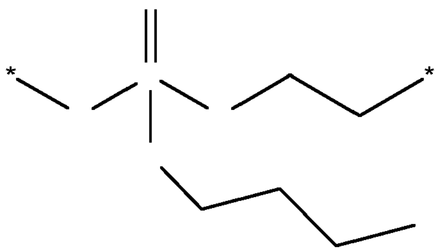

Scheme 2: Schematic representation of monomer unit comprised in the block 2 (i.e. central chain) of copolymers in Example 1, Table 1

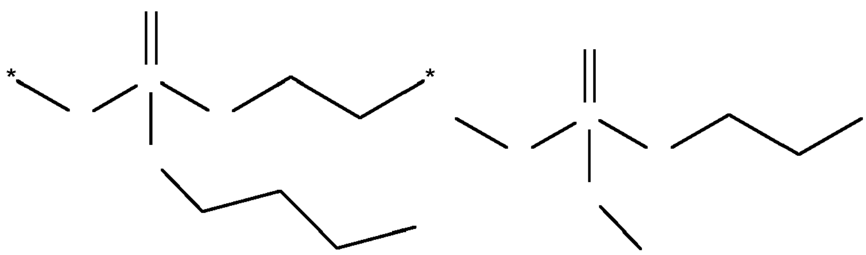

Scheme 3: Schematic representation of the two monomer units comprised in block 2 (i.e. central chain) of copolymer 10-65/65-10 of Example 1.

The two chemically similar lateral blocks bear the photoreactive butenyl side-chains (butenyl ethyl phosphate (BenEP)) necessary for further crosslinking while the molar mass of the saturated central block (butyl ethyl phosphate (BEP)) is going to determine the distance between crosslinking nodes, thus the stretchability. The nature of the repetitive units of the central block will also govern the hydrophilic/hydrophobic character of the chains but also of the network. A butyl side-chain, i.e. alkyl chain > 3 carbons, has been selected for the central block to limit the swelling of the material when used in aqueous environment and prevent water plasticizing effects. Phosphate 5-membered rings offer the advantage to copolymerize by organocatalyzed living ROP, so that the targeted triblock copolymer has been obtained by the sequential polymerization of corresponding monomers.

Even though a chemically symmetric ABA copolymer was targeted, a trisequential addition of the monomers with

a monofunctional benzyl alcohol initiator was here selected, among other possible strategies, such as the use of a difunctional alcohol.

For the sake of comparison, a random copolymer of a similar molar mass and 1:4 composition (butenyl ethyl phosphate:butyl ethyl phosphate) was synthesized from the comonomers mixture (r30-111).

NMR spectra were recorded for each block thanks to a sampling before adding the monomers of the next block. These results are displayed in Figure 1. Size exclusion chromatography (SEC) was also performed. It was carried out in dimethylformamide (DMF) at 45°C at a flow rate of 1 mL/min with a Viscotek 305 TDA liquid chromatograph equipped with 2 PSS SDV linear M columns calibrated with polystyrene standards. Samples were prepared by dissolution of 20 mg of polymer into 2 mL of DMF. In order to remove impurities of any kind the solution was first filtered on 2 μm filters. The composition of the obtained ABA copolymer is given by $^1$H-NMR spectra while the progressive shift of the GPC traces towards higher molar masses after each comonomer addition confirms the triblock structure and enables to obtain the number of monomer units of each block.

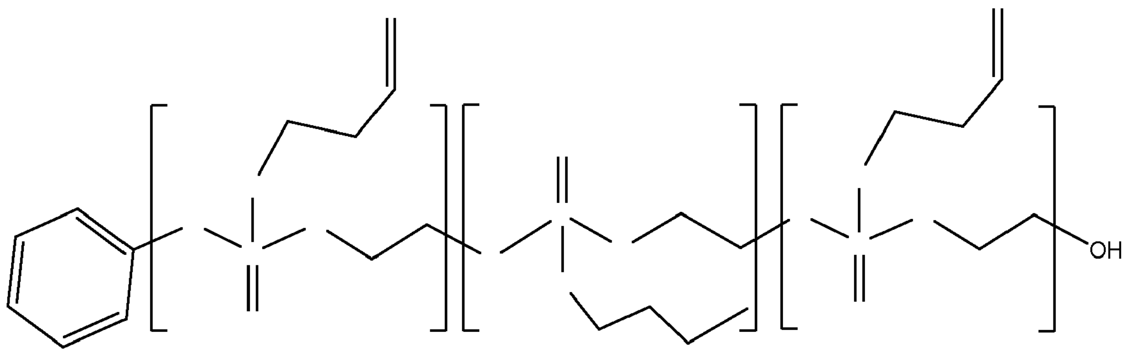

Scheme 4: Structure of copolymer of Example 1, code 10-80-10 as confirmed by 1H-NMR

The gel point of these two copolymers was measured using a rheometer via a time sweep experiment under UV irradiation and at a fixed given temperature in a plate-plate geometry with a distance between plates of 0.3 mm.

The gel point of the films was characterized by shear rheology in which the storage modulus (G') and loss modulus (G") were examined as a function of time of irradiation. For this experiment, the copolymers were mixed with 10 wt% of photosensitizer 2-hydroxy-4-(2-hydroxyethoxy)-2-methylpropiophenone (Irgacure-2959, Aldrich) and then tested on an ARES G2 rotational rheometer (TA Instruments) with the parallel plate geometry at a frequency of 1 Hz and strain of 1%, under UV using a UV-transparent quartz upper plate.

Interestingly, the triblock copolymer reaches the gel point faster than the random copolymer, i.e. after 1'11" rather than 3'13" for the random copolymer. This could be the sign of the occurrence of phase separation in the case of the triblock material increasing the local concentration of the unsaturations in the BenEP phases and thus the crosslinking rate. DSC analysis of the copolymers could not confirm such phase separation. Indeed, only one $T_g$ is observed for both copolymers and the DSC traces are very similar.

Besides, once both materials have reached the plateau, a lower elastic modulus is obtained for the triblock copolymer network; G'=208 kPa (blue curve) vs 405 kPa (red curve) which indicates an increased softness of the obtained network from the triblock copolymer. This first experiment already highlights significant impact of the copolymers structure on the crosslinking rate and mechanical properties of the resulting networks.

**Example 2. Network formation through curing**

The butenyl unsaturations of the prepared copolymers are used for crosslinking by UV light irradiation (365nm) in presence of a photoactivator 2-hydroxy-4-(2-hydroxyethoxy)-2-methylpropiophenone (Irgacure-2959, Aldrich).

Prepared polyphosphoester of Table 1 (150 mg) mixed with Irgacure 2959 (molar ratio 10:1) was dissolved in methanol and poured into a poly(tetrafluoroethylene) (PTFE) specially designed open dog-bone mold (20mm*5mm*0.3mm for the central part).

Different schemes of curing were tested.

In a first scheme, depicted with code **D-x-0,** the mold was left to dry for 1.5 hour. Once dried, it was put in an oven at the target temperature (x °C) under UV-A light (OmniCure Series 2000, 200 W, 365 nm) and cured for 30 min on one side, unmolded, flipped and cured again for 30 min on the other side.

In a second scheme, depicted with code **D-x-1,** the procedure was similar to D-x-0 but the mold was placed in an

ultrasound system (frequency 27 kHz) during the whole time of curing, with a temperature control.

In a third scheme, depicted with code **S't'-x-1,** the copolymer was dissolved at the concentration of limit solubility and poured in the mold. A pre-curing stage consisted of maintaining constant the concentration for 't' minutes, at x=35°C, while under UV-A irradiation and in the ultrasound system. Then, the temperature was increased to rapidly evaporate the methanol. The pre-cured and dried sample was then left under UV-A irradiation and in the sonicator bath for 30 minutes, unmolded, flipped and cured again for 30 minutes on the other side.

The crosslinking efficiency of these networks was then characterized by swelling tests in a good solvent (methanol). For this, samples were weighed (initial material weight) and then placed into methanol during 24h at room temperature in order to reach the swelling equilibrium while all unreacted parts flow out of the network. The swollen gel was then carefully collected and weighed (swollen gel weight). Finally, the gel was dried firstly under air and afterwards under vacuum until reaching constant weight (dried material weight). The swelling ratio and the insoluble fraction were calculated based on these weight measurements according to Equation 1 and Equation 2, respectively. To evaluate hydrophilicity, the same procedure may be carried out in water as a solvent.

$$\text{Equation 1: } swelling\ ratio = \frac{(swollen\ gel\ weight - dried\ material\ weight)}{dried\ material\ weight} * 100$$

$$\text{Equation 2: } insoluble\ fraction = \frac{dried\ material\ weight}{initial\ material\ weight} * 100$$

Their mechanical properties were evaluated by tensile tests in the dry state at room temperature, using the tensile film set-up in controlled force mode of the Dynamic Mechanical Analysis (DMA) (static). The samples were first equilibrated at the target temperature for 5 min and then a tensile stress ramp (0.005 MPa $min^{-1}$) upon rupture was applied.

For Strain Hysteresis, one sample was subjected to successive positive and negative stress ramps at the rate of 0.02 $MPa.min^{-1}$. Between each stress ramp, the sample was left to relax at the given stress during one minute. This cycle was repeated three times up to 0.1 MPa, then three times up to 0.2 MPa, and finally stretched upon breaking.

The results are displayed in the first two columns of Table 2 and in Figure 2.

Table 2: Results of swelling tests in methanol and tensile tests in the dry state of the networks obtained from the triblock copolymers crosslinked in various conditions: dry (D) or solvent (S) - temperature - ultrasound off (0) or on (1), E is the Young's modulus.

| Copolymer code | Curing conditions | Swelling rate (%) | Insoluble fraction (%) | E (MPa) | Elongation at break (%) |
|---|---|---|---|---|---|
| r30-111 comparative | D-25-0 | 172 | 81 | 0.89 | 13.6 |
| 10-80-10 comparative | D-25-0 | 230 | 78 | 0.87 | 25.6 |
| 10-80-10 comparative | D-50-0 | 210 | 79 | 1.30 | 16.9 |
| 10-80-10 comparative | D-75-0 | 181 | 81 | 1.43 | 16.3 |
| 10-80-10 comparative | D-60-1 | 168 | 81 | 1.69 | 15.8 |
| 10-80-10 comparative | S60-35-1 | 684 | 57 | 0.15 | 55 |
| 10-80-10 comparative | S15-35-1 | 263 | 78 | 0.60 | 50 |
| 10-160-10 comparative | D-25-0 | 633 | 48 | n.a. | n.a. |
| 10-160-10 comparative | D-60-1 | 500 | 53 | 0.03 | 205 |
| 10-160-10 comparative | S15-35-1 | n.a. | n.a. | n.a. | n.a. |
| 5-130-5 comparative | D-25-0 | 700 | 67 | 0.14 | 145 |
| 5-130-5 comparative | D-60-1 | 610 | 70 | 0.17 | 98 |
| 5-130-5 comparative | S15-35-1 | 1000 | 50 | 0.09 | 232 |
| 10-130-10 | D-25-0 | 350 | 80 | 0.51 | 76 |
| 10-130-10 | D-60-1 | 250 | 80 | 0.82 | 66 |
| 10-130-10 | S15-35-1 | 380 | 80 | 0.41 | 180 |

(continued)

| Copolymer code | Curing conditions | Swelling rate (%) | Insoluble fraction (%) | E (MPa) | Elongation at break (%) |
|---|---|---|---|---|---|
| 20-130-20 | D-25-0 | 160 | 75 | 0.98 | 56 |
| 20-130-20 | D-60-1 | 130 | 76 | 1.55 | 45 |
| 20-130-20 | S15-35-1 | 190 | 72 | 0.57 | 68 |
| 10-65/65-10 | D-25-0 | 361 | 79 | 0.18 | 125 |
| 10-65/65-10 | D-60-1 | 272 | 80 | 0.23 | 90 |
| 10-65/65-10 | S15-35-1 | 372 | 76 | | |

From Table 2, we can observe similar insoluble fractions, around 80%, for copolymers r30-111 and 10-180-10 showing the same crosslinking efficiency after 1h exposure to UV light. In contrast, the swelling rate is dependent of the random or blocky structure of the starting copolymers. The triblock precursor leads to a network that swells much more than the random-copolymer network.

The tensile tests for copolymers r30-111 and 10-80-10 gave very close elastic moduli, around 0.88 MPa. The chains structuration in the triblock was highly beneficial towards our objective of increasing the stretchability because the elongation at break is nearly doubled. It is increased from 13.6 % for random precursor to 25.6 % using the triblock precursor.

Localizing the reactive units for crosslinking at the extremities of a long central chain in a triblock architecture enables already a clear increase of the ultimate properties of the elastomers while maintaining a similar stiffness.

Trials to boost the crosslinking rate in solution and reach the gel point was investigated. Another source of external energy is ultrasound. Examples of the use of ultrasound to crosslink polymers are scarce, and to the best of our knowledge, were never combined with photo-crosslinking. The triblock precursor (10-80-10) was thus photo-crosslinked in solution for 60 minutes at 35°C in a sonicator bath (37 kHz), left to dry and further left under irradiation for 30 minutes in the same conditions (labelled S60-35-1 for solution 60 min-35°C-ultrasound on). To ensure that the ultrasound penetrated in the polymer medium, enough water was used to immerge almost completely the mold in the bath. Thanks to this energy-boosting system, a network was obtained.

To ensure that ultrasound did not alter chemically the chains which could promote crosslinking, precursors were left in a sonicator at 60°C for 2 hours without UV-irradiation. Even for prolonged sonication times, the copolymers structure remained unaffected, as evidenced by overlaying GPC chromatograms and $^1$H-NMR spectra with the non-sonicated precursors. This corroborates the fact that ultrasound act only as an energetic boost of the UV initiated crosslinking.

The ultimate elongation of the obtained network 10-80-10 reaches 55% which represents again a 2.1-times increase compared to the bulk crosslinking conditions. In line with a decrease of the crosslinking density, the obtained network is very soft. As a consequence, its elastic modulus decreases down to 0.15 MPa. This might be accounted for uncomplete crosslinking since the insoluble fraction falls down to 57% and very high swelling is observed (Table 2). The optimization of the pre-curing time in methanol (35°C, ultrasound ON) yielded a network combining high stretchability (up to 50%) with a stiffness of 0.60 MPa, that presented an increased toughness by a ratio of 1.35. Practically, the network was obtained with 15 minutes of pre-curing in solvent and with the ultrasound (S15-35-1) and further cured with ultrasound at the dry state for 30 minutes on each side. In this case, better crosslinking efficiency is obtained as evidenced by the insoluble fraction around 80%.

The wet conditions boosted with temperature and ultrasound is an efficient system to crosslink limiting potential defects in the network.

To better understand the effect of this energetic boost during pre-curing reactions, networks were prepared by crosslinking in dry conditions with temperature or ultrasound separately.

One network was fabricated with only external ultrasound brought to the system. In addition to the interaction with the precursor in the mold, the ultrasound also intrinsically heats the water of the bath. Therefore, the final crosslinking conditions are dry, 60°C with the ultrasound on (D-60-1) and were applied to the precursor for 30 minutes on each side. The network is much stiffer with an elastic modulus up to 1.69 MPa, but elongates less, only around 16%. Interestingly, it is 1.2 times tougher than the network obtained in the standard conditions (D-25-0). It seems that ultrasound acts as a very efficient source of energy to increase the crosslinking density. Though, the insoluble fraction did not display a significant increase, laying around 80%. This shows that the same fraction of chains participated in the network. Therefore, it could support our hypothesis that the crosslink functionality was able to further increase with ultrasound, because 10 units are available on each side. It means that one chain is attached to more chains, increasing the crosslink density thus the toughness.

Nevertheless, as the ultrasound also heats the medium, the effect of temperature alone was investigated and compared to these results to better understand the role of ultrasound in the crosslinking.

The influence of temperature was studied with two different conditions, at 50°C and 75°C respectively, below and above the temperature of the bath obtained with sonication in water. Then, the crosslinking conditions are dry, 50°C or 75°C, and ultrasound off (D-50-0 and D-75-0) for 30 minutes on both sides. The results are again displayed in Table 2. It shows that increasing the temperature increases the crosslinking density as evidenced by the decreasing swelling rate in methanol, accompanied by an increase of the modulus. Nevertheless, lower ultimate elongations are obtained compared to D-25-0. Therefore, this study allows to understand that the ultrasound has a predominant effect on the crosslinking, explaining why after crosslinking in wet conditions, networks were obtained only with the help of ultrasound.

Two crosslinking conditions, both using ultrasound in dry or wet conditions (D-60-1 and S15-35-1) enabled to increase the toughness compared to the standard photo-curing procedure (in bulk without sonication).

Comparing copolymers 10-130-10 and 10-160-10 with the copolymer 10-80-10, lower crosslinking densities were obtained for the copolymer with the longest central block as evidenced by the lowest elastic modulus at the plateau during crosslinking in the rheometer, and by the highest swelling rate in methanol.

In the case of the 10-160-10 copolymer, the crosslinking efficiency decreases; the gel content after curing in the standard conditions (D-25-0) falls down to 48%. Interestingly, the crosslinking rate also indicates a slower curing (higher gel point) proving again that the crosslinking is disfavoured by a long central block.

Regarding curing conditions, from Table 2, one can notice that for 10-130-10 the tendencies are respected in the swelling rates, with a higher crosslinking density when cured with ultrasound at the dry state, and a lower one when pre-cured wet with ultrasound. In this case no differences in the gel content were noted. Here again, the insoluble fraction is not affected in contrast to the swelling rate, testifying the efficient energetic boost brought by ultrasound to increase the functionality of the network nodes at the dry state. However, the 10-160-10 copolymer shown an increased crosslinking density, but no network was obtained after the pre-curing in solvent. Here, the pre-curing most probably consumed unsaturations by adjacent reaction limiting chain coupling to a few chains and preventing further reaction to reach a network.

There is a strong influence of the length of the central block, especially on the stretchability. Indeed, using the standard curing path, a 1.6-times increase in the DP (10-130-10 compared to 10-80-10) led to an increase of 2.97 in the elongation at break, reaching a value of 76%. Overall, the toughness was increased by a factor 1.78. For 10-160-10, the standard network was so difficult to handle that we were not able to perform a tensile test on it.

Surprisingly, the copolymer 10-130-10 leads to a softer and extendable network, reaching outstanding ultimate elongation of 180%. Cycles of strain hysteresis evidence the fully elastic behavior. These unprecedented results, especially elongation at break about 180%, i.e. 12-times higher compared to literature, making those polyphosphoesters valuable elastomers.

In comparison, the stiffer network from 10-160-10 obtained by ultrasonication was possible to test, still with difficultly. It can be easily understood from the elastic modulus of only 0.03 MPa, and the gel content of 53%. Though, 205% of elongation at break was reached.

There is also a strong influence in the length of the terminal blocks. It influences the stiffness of the network. This can be seen with the gel point experiments where the plateau of elastic modulus with lateral blocks composed of 20 units is 15 times higher compared to 5-130-5. This was supported by the swelling rates obtained in methanol displayed in Table 2. Indeed, taking first the classic crosslinking procedure (D-25-0), the network from 5-130-5 was swelling by 700 %, while the network from 20-130-20 was swelling by only 160 %. Adding up that we obtained a swelling of 350 % from 10-130-10, this shows that the crosslinking density is strongly affected and that it seems to deviate from a linear proportion when the chain length is highly reduced. When analyzing the insoluble fractions, it shows that increasing the number of crosslinking moieties does not lead to higher gel content. This confirms that 80% seems to be the upper limit with these systems and that adapting the number of units to crosslink only leads to a higher node functionality and not more chains participating in the network. On the other hand, decreasing the lateral block length of the precursor gives a lower node functionality.

The crosslinking with ultrasound at the dry state led to lower swelling, lower elongations and stiffer materials. In the opposite, the pre-curing in solvent led to higher swelling, higher elongations and softer materials. Nevertheless, for the copolymer with only 5 crosslinking moieties in its lateral blocks, the system with a pre-curing in solvent is limited, leading to a gel content which fell down to 50%. Even though a network is still obtained in comparison to the case of 10-160-10, this still shows that one should not use less than 5 crosslinking moieties in each block if self-standing materials are foreseen. Alternatively, with an elongation at break of 232%, this could be highly valuable as degradable coatings.

Regarding the influence of the "methyl" unit in the copolymer coded 10-65/65-10, we observed that thermal stability is only slightly affected with the $T_g$ increasing only slightly from -57°C to -47°C. Nevertheless, there was a strong influence on the copolymer interaction with water. At the concentration of 11 g/L, the copolymer 10-130-10 is not soluble in water, while the copolymer 10-65/65-10 becomes partly soluble in water. It is corroborated by the swelling rates after crosslinking by UV irradiation. Indeed, the methanol being a good solvent of the copolymers, both networks easily swell in MeOH. In contrast, the butyl side-chain bringing hydrophobicity, the swelling in water is lower than in MeOH and nearly

doubled for the more hydrophilic copolymer. A similar tendency is observed while varying the crosslinking conditions, i.e. higher crosslinking density (lower swelling) when crosslinking is performed at higher temperature and with ultrasound (D-60-1) and higher swelling when the crosslinking is performed in a solvent.

Remarkably, the insoluble fraction remains around 80% for all conditions for this copolymer.

**Example 3. Preparation of composites**

The composite fabrication was obtained by impregnation with a targeted composition of 12 wt% of polycaprolactone fibres (PCL), dissolving the copolymers in methanol before pouring, letting it dry and cure it under UV-A for 30 minutes on both sides (D-25-0). The mats were deposited with the flattest side towards the mold to ensure that the air side of the composite kept the roughness of the mat. In this example, the nanofibres were structured in a honeycomb pattern.

UV crosslinking of the copolymers was found more efficient in the presence of PCL fibres. This surprising observation is caused by the scattering in all directions of the UV light by the fibres. It is thus advantageous to combine the curable copolymer of the invention with polyester fibres. With such efficiency, also one side need to be irradiated to have a good crosslinking, as opposed to irradiating both sides of the composite. It was observed that a composite is equally crosslinked if it is irradiated for 30 min only on one side or for 15 min on each side. In contrast, without embedded PCL, lower crosslinking density of copolymer is obtained if only one side is irradiated.

Two composites were prepared, differing by the size of the hexagon in the honeycomb pattern. Both were prepared using the 10-65/65-10 copolymer described previously.

c-HC1: size of hexagon 0.85 mm
c-HC2: size of hexagon 1.70 mm

Complete impregnation was checked by the aspect of the surfaces with scanning electron microscopy (SEM). Yet, the complete impregnation of the fibres, up to the upper surface, depends on the available interface between fibres and matrix, and the wettability between both polymers.

This is indeed shown in Figure 3, where for both composites (c-HC1 and c-HC2) with 12 wt% of PCL, no fibres can be detected at the surface because they are fully coated by the copolymer matrix. The impregnation is independent from the size of the hexagons in the honeycomb pattern.

One side of the composite kept the roughness of the fibrous mat, while the other side was made completely smooth by the flat mold, creating a gradient which may advantageously provide self-folding capacity.

**Example 4. Properties of composites**

These composites were tested mechanically (Figure 4) to check that no delamination occurs when stretched, and to investigate the influence of the size of hexagons.

The composite with smaller hexagons (c-HC1) acts as a more efficient reinforcement because it absorbs more energy before fracture, as it is slightly stiffer and elongates more. Nevertheless, we did not observe premature opening in the more fragile centers of the hexagons for either c-HC1 or c-HC2. This proves the interest of choosing micro-honeycomb, to distribute more homogeneously the load, and increase it without local pre-failure.

Both composites presented self-folding capacities. For the sake of comparison, the composites were cut to be tested with an angle of 30° (armchair direction), along one of the symmetry axes of the honeycomb pattern, and with an angle of 15°, in between both symmetry axes. First, for both composites, the observed curvature is larger when the angle between the zigzag direction (0°) and the tensile axis is 15° compared to 30°. It is similar to what had been observed previously due to multi-components fold when de-axed from a symmetry axis of the pattern. Then, at each tested angle, the obtained curvatures were larger for c-HC1. Such differences could be explained by the stiffer reinforcement from HC1 than with HC2, creating a more important gradient in between the elastic and plastic layers. Self-folding performances as high as the ones reported for PDMS composites were achieved with a fully degradable composite.

Once the material is self-folded, it can be opened in two ways. Classically, the initial shape can be recovered simply by heating above the melting temperature of the degradable polyester fibres and a new shape can be reprogrammed. Moreover, the folded shape can also be opened by swelling in water, or body fluids for instance. This cycling ability was tested on both c-HC1 and c-HC2, and the results are displayed in Figure 5. Both composites were stretched such that a complete circle was obtained, with both ends coming in contact. Then, they were swollen in cold water (<37°C) to mimic what it would be inside the body. First, it can be seen that both composites open up. This is due to the fact that the gradient along the thickness which is responsible for the fold is also responsible for a differential swelling like a hygromorph. Indeed, the composite could be schemed as a bilayer, where one layer made of PPE is hydrophilic while the other made of PPE and PCL is restricted by the hydrophobicity of the PCL fibres. While the PPE layer comes in the inside when actuated as a mechanomorph, it goes towards the outside of the curve when actuated as a hygromorph

because it swells more. Therefore, swelling in cold water is responsible for an opening of the curved object. After swelling for a few seconds the composites open in a controlled manner and a constant ratio in between angles before and after immersion. Here, it is striking how the honeycomb pattern with smaller hexagons (c-HC1) retains more the fold upon swelling (ratio of 1.64) compared to the other (c-HC2) almost completely losing the curve (ratio of 3.43). With this matrix, c-HC1 was the best to retain the folding.

Finally, after transferring the composites in hot water (80°C) to melt the fibres inside, both sheets curved in the opposite direction in a similar way. This proves that the differential opening observed in the previous step only comes from the size of the hexagons, bringing different mechanical behaviors. Therefore, it is noteworthy that depending on the needs for specific applications, such implanted behavior upon swelling could be controlled by choosing a specific hexagons size. It is also interesting to mention that because the swelling is responsible for a fold in the other direction as the one obtained mechanically, the curvature changes direction when the fibres are melted and do not retain the shape anymore. This curve inversion, which occurred when transferring the composite from cold to hot water, was really rapid, occurring on a one second scale. This could most probably be advantageous for temperature sensors where switch speed is important. Finally, upon drying, both composites regained their initial flat shapes, closing the loop which could be restarted at will.

To evaluate visually the shape-memory properties, a rectangle sample was rolled (without stretching) around a tube which perimeter matches the length of the sample. While wrapped around the tube, the sample was successively heated to melt the PCL inside, and cooled to recrystallize the fibres which would have to adapt to the new rolled shape. This is shown in Figure 6, where the dotted circle represents the tube around which the composite was programmed.

To quantify the shape-fixing capacity, one must compare the angle between the two ends before and after releasing the constraint. During programming, the two ends are brought together such that the angle is 0°. It can be seen in Figure 6 that the sample did not open at all, which means that the angle between the two ends after release remains 0°, giving that the shape-fixity rate is very close to 100%. We could observe by hand that one sample could be cyclized more than 10 times at least.

To test the cytotoxicity of the composite sheets, a specific procedure for tissue engineering is designed. Cells are deposited and grown at the surface of the material. Based on the different sheets accessible, the influence of the presence or absence of roughness and the size of the hexagons can be studied. To mimic the cues that cells would feel on the scaffold, the sheets are previously self-folded.

The hydrolytic degradation of both composites c-HC1 and c-HC2 was followed by comparing the swelling rates of pads left in a PBS solution (pH = 7.4; 10 mg composite/mL PBS) one by one. For each pad, we measured the ratio between the swelling rate after x days in the solution (after being rinsed in deionized water to remove salt excess) over its initial swelling rate (measured prior degradation in deionized water). The results of this ratio over time spent in the PBS solution, renewed every 5 days, are displayed in Figure 7. There are similar trends for both composites with different hexagon size, but with slightly different kinetics. There are three distinct regimes. Indeed, for c-HC2, it can be seen that there is step-like increase after one week, then an exponential-like increase up to two months, and finally a decrease up to 85 days of degradation.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A curable copolymer comprising a first terminal chain consisting of monomer units according to formula (Ia), a second terminal chain consisting of monomer units according to formula (Ib) and a central chain comprising monomer units according to formula (II), said first and second terminal chains being each coupled to one end of said central chain,

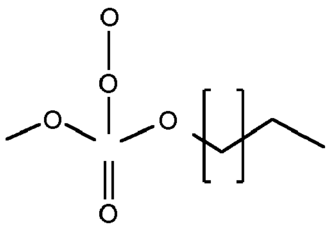

(Ia)

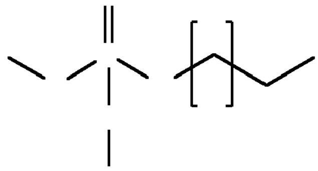

(II)

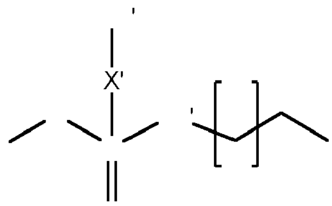

(Ib)

wherein:

- one of $X_1$, $X_2$ is an oxygen, one of $X_1$', $X'_2$ is an oxygen, one of $Y_1$, $Y_2$ is an oxygen, the other of each pair is independently of one another an oxygen, a $NR_3$ group, or a $C(R_4)_2$ group;
- $R_1$ and $R_1$' each independently from one another is a curable group selected from a list consisting of a double carbon bond, a triple carbon bond, a vinyl ether, and an acrylate group, optionally preceded by an alkyl chain of 1 to 20 carbon atoms;
- $R_2$ is either a non-curable group selected from a list consisting of a hydrogen, an alkyl chain of 1 to 20 carbon atoms, an oligo(ethylene oxide), and an optionally substituted aryl group, or $R_2$ is absent and $Y_1$ is an oxygen ion;
- $R_3$ and $R_4$ denote a hydrogen or a hydrocarbon group of 1 to 6 carbon atoms;
- p, p' and q each independently of one another denote an integer from 0 to 10;
- the number of monomer units according to formula (Ia) and (Ib) each is an integer from 6 to 20 as measured from GPC calibrated with polystyrene standard;
- the number of monomer units according to formula (II) is from 85 to 155 as measured from GPC calibrated with polystyrene standard.

2. The curable copolymer according to claim 1 wherein $R_1$ and $R_1$' are the same.

3. The curable copolymer according to any one of the preceding claims wherein the number of monomer units according to formula (Ia) and (Ib) each is from 8 to 15.

4. The curable copolymer according to any one of the preceding claims wherein the central chain further comprises monomeric units according to formula (IIb), said monomeric units according to formula (II) and formula (IIb) being randomly or sequentially distributed in said central chain,

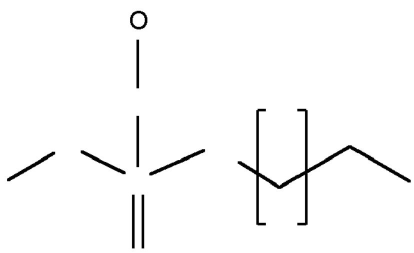

(IIb)

wherein:

- one of $Y_1$', $Y_2$' is an oxygen, the other is an oxygen, a $NR_3$ group or a C(R4)2 group;
- $R_2$' is either a non-curable group selected from a list consisting of a hydrogen, an alkyl chain of 1 to 20 carbon atoms, an oligo(ethylene oxide), and an optionally substituted aryl group or $R_2$' is absent and $Y_1$' is an oxygen ion, with the proviso that $R_2$' is different from $R_2$ of formula (II);
- $R_3$ and $R_4$ denote a hydrogen or a hydrocarbon group of 1 to 6 carbon atoms;
- q' denote an integer from 0 to 10;
- the sum of monomer units according to formula (II) and formula (IIb) is from 85 to 155 as measured from GPC

calibrated with polystyrene standard.

**5.** A process for curing a copolymer according to one any of the preceding claims comprising the steps of:

- proving a solution of the curable copolymer of any one of claim 1 to 4 and a photo-activator,
- optionally at least partially drying said solution,
- irradiating the solution with light of wavelength corresponding to photoactivation of said photo-activator.

**6.** A process for curing a copolymer according to claim 5 wherein the step of irradiation is performed under ultrasonication.

**7.** A process for curing a copolymer according to any one of claim 5 or claim 6 where irradiation is performed under a temperature of from 20 to 60°C.

**8.** A composite comprising the curable copolymer according to any one of the preceding claims and degradable polyester fibres.

**9.** The composite according to claim 8 wherein the degradable polyester fibres are polycaprolactone fibres.

**10.** The composite according to any one of claim 8 to 9 wherein the degradable polyester fibres have a diameter of from 50 to 1000 nanometers.

**11.** The composite according to any one of claim 8 to 10 wherein the degradable polyester fibres are structured in a honeycomb pattern.

**12.** The composite according to any one of claim 8 to 11 wherein the curable copolymer of any one of claim 1 to 4 has been cured so as to form a network of cured copolymer embedding the degradable polyester fibres.

**13.** A process for preparing a composite according to any one of claim 8 to 12 comprising the steps of:

- electrospinning a solution of a degradable polyester on a template, preferably on a honeycomb patterned template,
- providing a solution of a curable copolymer according to any of claims 1 to 4,
- dipping the electrospun degradable polyester fibres in the solution of the curable copolymer according to any one of claim 1 to 4,
- drying the so-obtained composite,
- optionally curing the so-obtained composite, preferably by photo-curing.

**14.** The process for preparing composite according to the preceding claim wherein electrospinning is performed on a honeycomb pattern template, said honeycomb pattern having preferably a size of hexagon below 10 millimeter, more preferably below 1 millimeter.

**15.** A medical implant comprising the composite according to any one of claim 8 to 12.

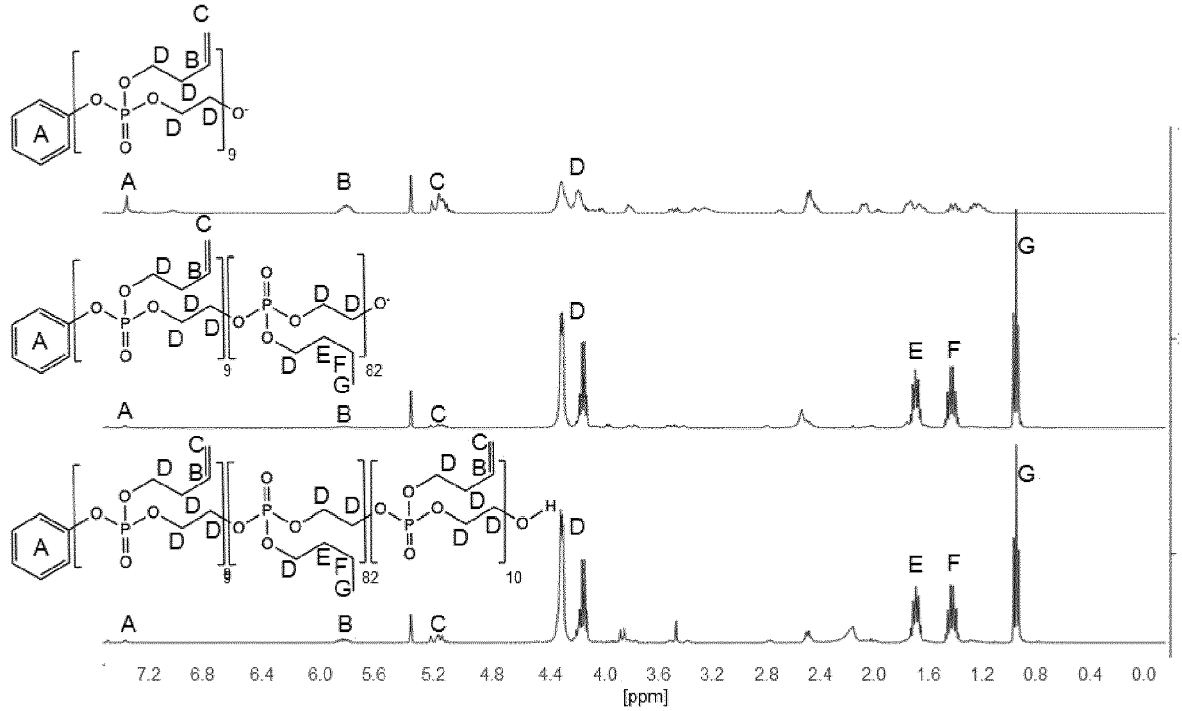


**Figure 1**

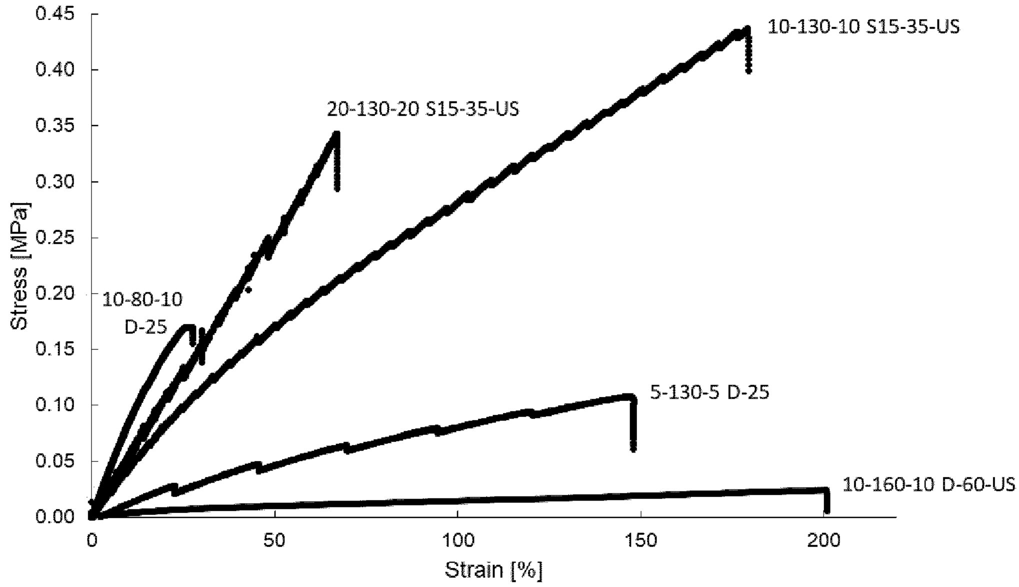


**Figure 2**

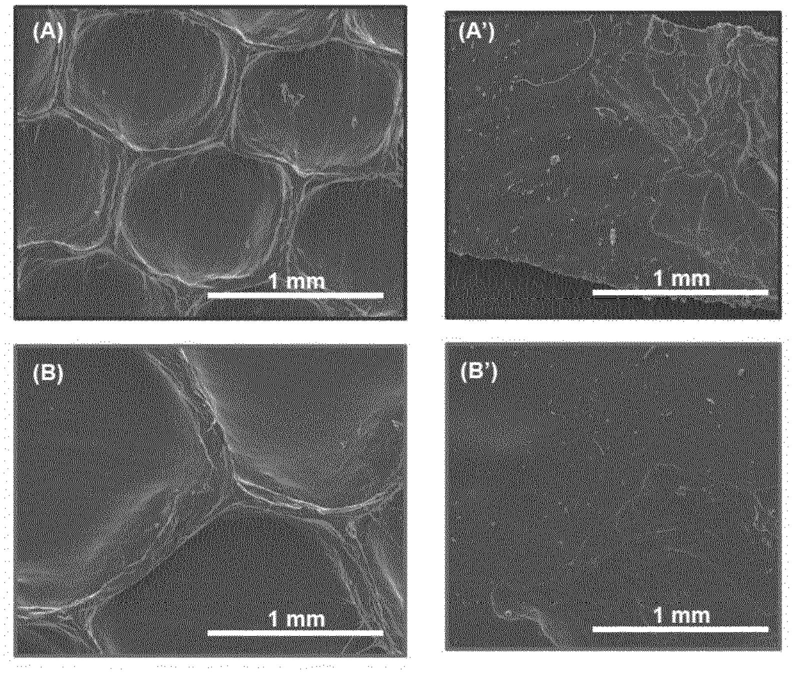


**Figure 3**

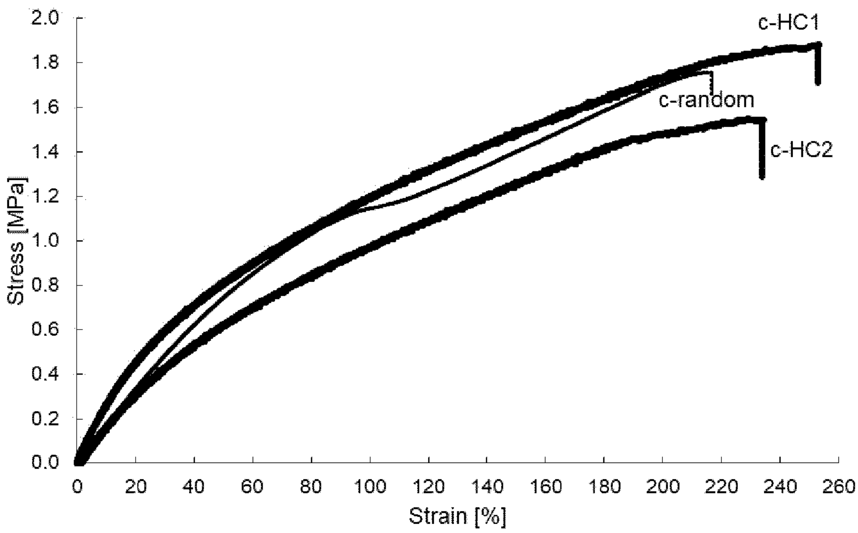


**Figure 4**

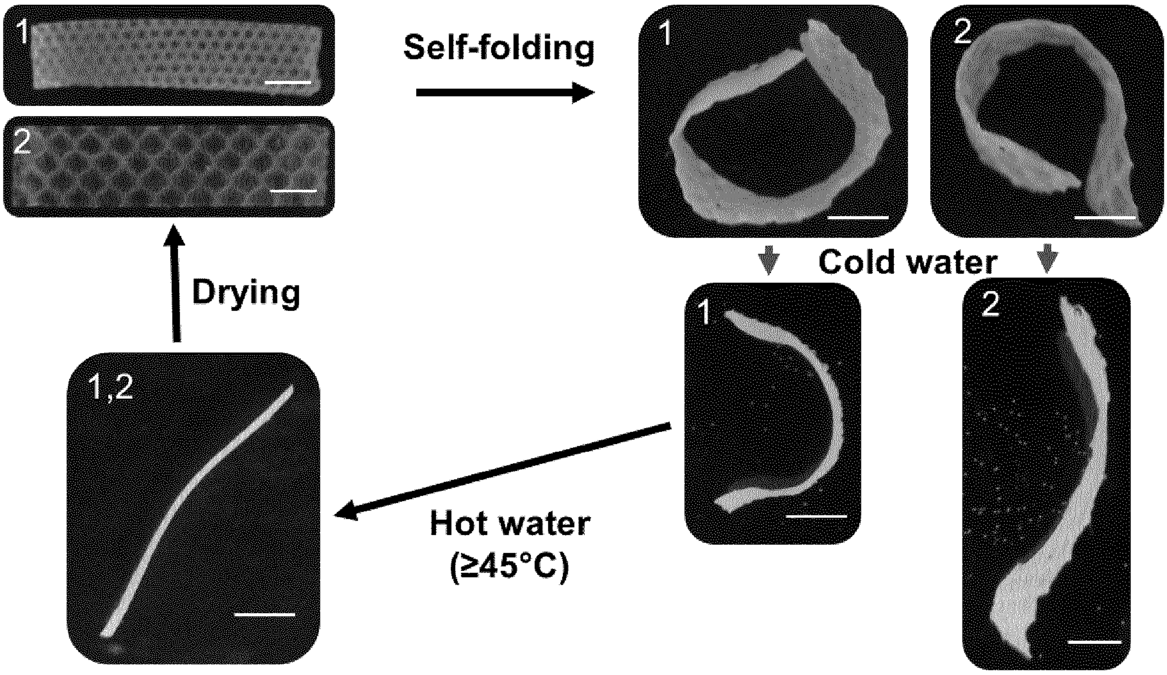


Figure 5

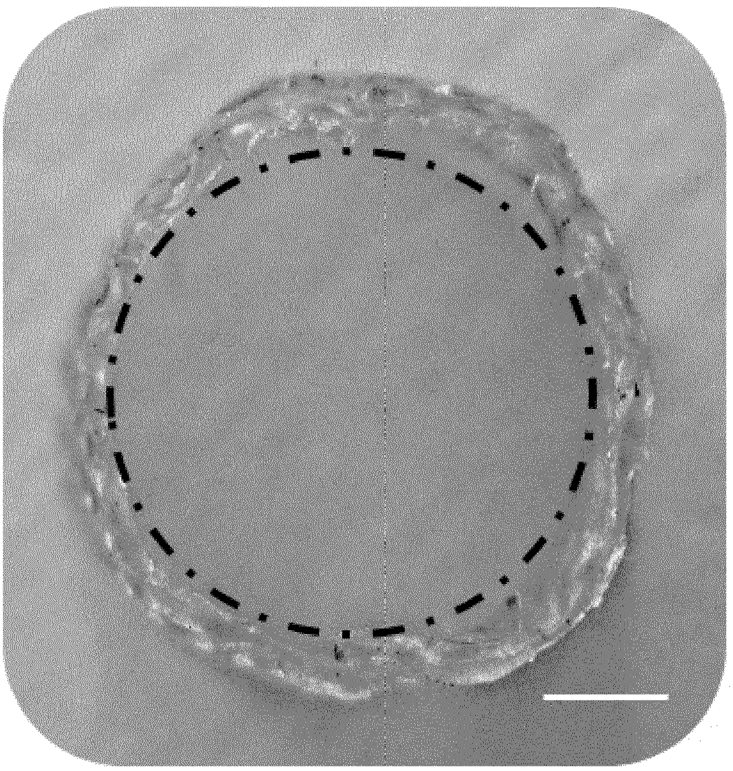

Figure 6

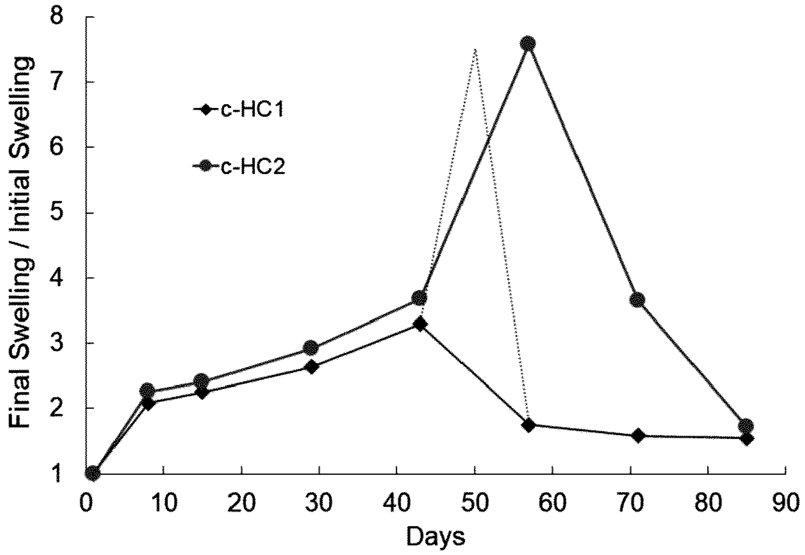
Final Swelling / Initial Swelling
8
7
6
5
4
3
2
1
c-HC1
c-HC2
0
10
20
30
40
50
60
70
80
90
Days

Figure 7

Europäisches Patentamt
European Patent Office
Office européen des brevets

# EUROPEAN SEARCH REPORT

Application Number
EP 23 20 6697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/193504 A1 (WOOLEY KAREN [US] ET AL) 10 July 2014 (2014-07-10)<br>* paragraph [0004] - paragraph [0093]; claims 1-23; examples *<br>----- | 1-15 | INV.<br>C08G79/04<br>C08G79/06<br>C08L85/02 |
| X | WO 02/092667 A1 (JOHNS HOPKINS SINGAPORE PTE LT [SG]; WANG JUN [US] ET AL.) 21 November 2002 (2002-11-21)<br>* page 1, line 14 - page 25, line 26; claims 1-70; examples *<br>----- | 1-15 | |
| X | BAUER KRISTIN N ET AL: "Main-chain poly(phosphoester)s: History, syntheses, degradation, bio-and flame-retardant applications",<br>PROGRESS IN POLYMER SCIENCE,<br>vol. 73, 1 January 2017 (2017-01-01), pages 61-122, XP085170986,<br>ISSN: 0079-6700, DOI: 10.1016/J.PROGPOLYMSCI.2017.05.004<br>* page 61 - page 122 *<br>----- | 1-15 | |
| | | | TECHNICAL FIELDS SEARCHED (IPC) |
| X | Tee Hisaschi: "Polyphosphoesters: A Degradable Alternative to Polyolefins and Poly(ethylene glycol)",<br>Doctoral Thesis, Johannes Gutenberg Universität,<br>31 December 2019 (2019-12-31), XP055897407,<br>Retrieved from the Internet:<br>URL:https://pure.mpg.de/rest/items/item_3053117/component/file_3231781/content<br>[retrieved on 2022-03-03]<br>* page 1 - page 267 *<br>-----<br>-/-- | 1-15 | C08G<br>C08L |

The present search report has been drawn up for all claims

1

| Place of search | Date of completion of the search | Examiner |
|---|---|---|
| The Hague | 25 April 2024 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 20 6697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO YING ET AL: "A fully degradable and photocrosslinked polysaccharide-polyphosphate hydrogel for tissue engineering", CARBOHYDRATE POLYMERS, APPLIED SCIENCE PUBLISHERS , LTD BARKING, GB, vol. 225, 28 August 2019 (2019-08-28), XP085818019, ISSN: 0144-8617, DOI: 10.1016/J.CARBPOL.2019.115257 [retrieved on 2019-08-28] * page 115257 - page 115266 * ----- | 1-15 | |
| X | BAETEN EVELIEN ET AL: "Anionic flow polymerizations toward functional polyphosphoesters in microreactors: Polymerization and UV-modification", EUROPEAN POLYMER JOURNAL, PERGAMON PRESS LTD OXFORD, GB, vol. 80, 16 February 2016 (2016-02-16), pages 208-218, XP029595831, ISSN: 0014-3057, DOI: 10.1016/J.EURPOLYMJ.2016.02.012 * page 208 - page 218 * ----- | 1-15 | TECHNICAL FIELDS SEARCHED (IPC) |

The present search report has been drawn up for all claims

1

| Place of search | Date of completion of the search | Examiner |
|---|---|---|
| The Hague | 25 April 2024 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 6697

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | Publication date |
|---|---|---|---|
| US 2014193504 A1 | 10-07-2014 | US 2014193504 A1 | 10-07-2014 |
| | | WO 2014107200 A1 | 10-07-2014 |
| WO 02092667 A1 | 21-11-2002 | US 2005131200 A1 | 16-06-2005 |
| | | US 2008176800 A1 | 24-07-2008 |
| | | US 2008176959 A1 | 24-07-2008 |
| | | WO 02092667 A1 | 21-11-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **RIVA et al.** synthesized PPE networks by reacting under UV light phosphate-containing chains bearing pendant unsaturations randomly distributed along the PPE backbone. *Biomacromolecules*, 2020, vol. 21, 349-355
- *Macromol. Biosci*, 2016, vol. 16, 1745-1761
- *Macromolecules*, 2012, vol. 45, 4476